# DEMANDE DE BREVET EUROPEEN

(11) **EP 4 813 741 A1**
(43) Date de publication de la demande: **30.09.2026**
(21) Numéro de dépôt: 26165142.6
(22) Date de dépôt: 16.03.2026
(51) Int. Cl.: B60N 2/818, B60N 2/824, B60N 2/894

(54) **APPUI-TÊTE DE SIÈGE DE VÉHICULE AUTOMOBILE**

(30) Priorité: 17.03.2025 FR 2502648
(71) Demandeur: Tesca Seat Components Services, 92800 Puteaux (FR)
(72) Inventeur: GEORGES, Laurent, 92800 Puteaux (FR); LEFEVRE, Steve, 92800 Puteaux (FR)
(74) Mandataire: Sayettat, Julien Christian

(57) **Abrégé**

L'invention concerne un appui-tête (1) de siège de véhicule automobile, comprenant deux tiges (2) et un boitier (3) présentant deux conduits (4a) recevant chacun une tige (2) respective en coulissement, au moins un desdits conduits étant un conduit pinçant (4a) présentant au moins un palier (5) pinçant la tige (2) correspondante, ledit palier présentant une patte (6) élastiquement déformable issue de moulage dudit conduit et un ressort (7) de rappel de ladite patte contre ladite tige, ledit conduit pinçant présentant une patte (6) unique prenant appui selon une première direction (X) sur la tige (2) correspondante, de sorte que ladite tige soit pincée entre ladite patte et au moins une zone d'appui prévue dans ledit conduit pinçant.

## Description

L'invention concerne un appui-tête de siège de véhicule automobile.

Il est connu, notamment du document EP-3 708 425, de réaliser un appui-tête de siège de véhicule automobile, ledit appui-tête comprenant :
- deux tiges métalliques parallèles destinées à être montées en haut de dossier dudit siège,
- un boitier en matériau plastique moulé, ledit boitier présentant deux conduits recevant chacun une tige respective en coulissement de manière à permettre un réglage en hauteur dudit boitier, au moins un desdits conduits étant un conduit pinçant présentant :
   - au moins un palier pinçant la tige correspondante, ledit palier présentant deux pattes élastiquement déformables issues de moulage dudit conduit,
   - un ressort de rappel desdites pattes contre ladite tige.

Avec une telle réalisation, le palier pinçant est moulé d'une pièce avec le boitier, ce qui évite d'avoir à rapporter un palier sur ledit boitier ; il en résulte une réduction du coût de fabrication de l'appui-tête.

En particulier, les deux pattes sont diamétralement opposées, le ressort les actionnant l'une vers l'autre de manière à pincer la tige entre lesdites pattes.

Cependant, une telle réalisation requiert une place suffisante pour pouvoir intégrer les pattes et le ressort.

En outre, il est difficile avec une telle réalisation de maîtriser finement l'effort de pincement, ce qui peut entraîner un coulissement non répétable d'un appui-tête à l'autre.

L'invention a pour but de pallier ces inconvénients.

A cet effet, l'invention propose un appui-tête de siège de véhicule automobile, ledit appui-tête comprenant :
- deux tiges métalliques parallèles destinées à être montées en haut de dossier dudit siège,
- un boitier en matériau plastique moulé, ledit boitier présentant deux conduits recevant chacun une tige respective en coulissement de manière à permettre un réglage en hauteur dudit boitier, au moins un desdits conduits étant un conduit pinçant,

ledit conduit pinçant présentant :
   - au moins un palier pinçant la tige correspondante, ledit palier présentant une patte élastiquement déformable issue de moulage dudit conduit,
   - un ressort de rappel de ladite patte contre ladite tige
ledit palier pinçant présentant une patte unique prenant appui selon une première direction sur la tige correspondante, de sorte que ladite tige soit pincée entre ladite patte et au moins une zone d'appui prévue dans ledit palier pinçant.

Dans cette description, les termes de positionnement dans l'espace (haut, bas, vertical, horizontal,...) sont pris en référence à un appui-tête monté dans le véhicule.

Les termes de repère circulaire (radialement, axial,...) sont quant à eux considérés relativement à la direction générale d'extension d'une tige.

On précise en outre que, dans cette description, les termes de positionnement dans l'espace (supérieur, longitudinal, transversal, vertical, ...) sont pris en référence à l'appui-tête disposé dans le véhicule en situation d'utilisation, ledit véhicule s'étendant longitudinalement selon sa longueur (axe X), transversalement selon sa largeur (axe Y) et verticalement selon sa hauteur (axe Z).

Avec l'agencement proposé, de même que dans l'art antérieur cité plus haut, le palier pinçant est moulé d'une pièce avec le boitier, ce qui évite d'avoir à rapporter un palier sur ledit boitier ; il en résulte une réduction du coût de fabrication de l'appui-tête.

Par ailleurs, le fait de ne mettre en œuvre qu'une seule patte permet de réduire le volume de l'appui-tête.

Enfin, comme on le verra avec une forme de ressort préférée et décrite plus loin, on parvient à maîtriser finement le pincement de la tige, ce qui permet de disposer d'un coulissement répétable d'un appui-tête à l'autre.

D'autres particularités et avantages de l'invention apparaîtront dans la description qui suit, faite en référence aux figures jointes, dans lesquelles :
[Fig.1] est une vue en perspective partielle d'un appui-tête selon une première réalisation,
[Fig.2] est une vue de détail de la figure 1,
[Fig.3] est une vue en coupe horizontale de détail de la première réalisation,
[Fig.4] est une vue en perspective partielle d'un appui-tête selon une deuxième réalisation.

En référence aux figures, on décrit un appui-tête 1 de siège de véhicule automobile, ledit appui-tête comprenant :
- deux tiges 2 métalliques parallèles destinées à être montées en haut de dossier dudit siège,
- un boitier 3 en matériau plastique moulé, ledit boitier présentant deux conduits 4a,4b recevant chacun une tige 2 respective en coulissement de manière à permettre un réglage en hauteur dudit boitier, au moins un desdits conduits étant un conduit pinçant 4a,

ledit conduit pinçant présentant :
   - au moins un palier 5 pinçant la tige 2 correspondante, ledit palier présentant une patte 6 élastiquement déformable issue de moulage dudit conduit,
   - un ressort 7 de rappel de ladite patte contre ladite tige,
ledit palier pinçant présentant une patte 6 unique prenant appui selon une première direction X sur la tige correspondante, de sorte que ladite tige soit pincée entre ladite patte et au moins une zone d'appui 8 prévue dans ledit palier pinçant.

De façon non représenté, le boitier 3 est garni d'un coussin.

Selon les réalisations représentées, la patte 6 présente une première extrémité 9a par laquelle elle se relie au reste du boitier 3, de manière à définir dans ledit boitier une fente 10 en forme générale de U permettant l'application de ladite patte vers la tige 2 correspondante, ladite patte présentant une deuxième extrémité 9b prenant appui sur ladite tige.

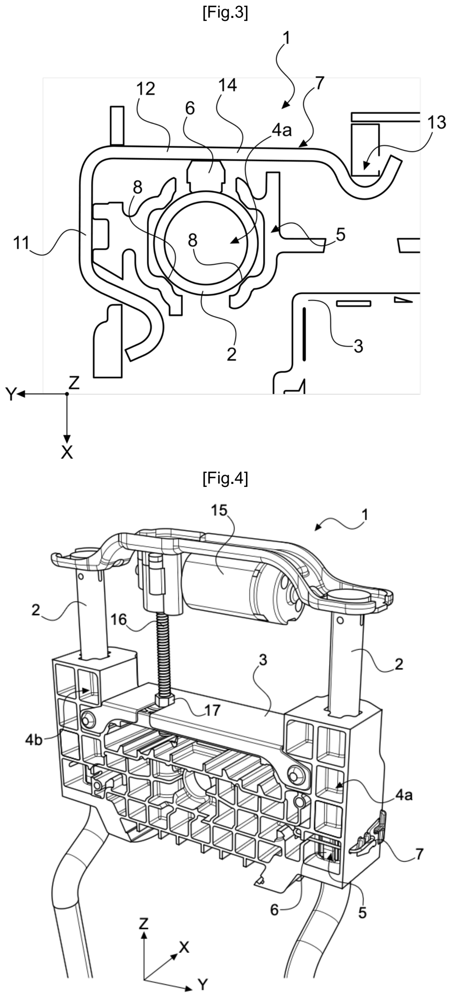

Selon le mode de réalisation représenté en figure 3, un conduit pinçant 4a présente deux zones d'appui 8, de sorte que la tige 2 correspondante soit triplement pincée entre la patte 6 et lesdites zones, ce qui permet que ladite tige soit bloquée à la fois selon les directions longitudinale X et transversale Y.

Selon les réalisations représentées, le ressort 7 :
- est sous forme d'un fil plié en métal à ressort s'inscrivant dans un plan - ici sensiblement horizontal -,
- présente une partie en forme générale de L dont la base 11 est fixée au boitier 3 et dont la hampe 12 prend appui sur la patte 6 correspondante, afin d'actionner ladite patte en appui sur la tige 2 correspondante.

Selon le mode de réalisation représenté en figure 3, une butée 13 est prévue sur le boitier 3, ladite butée prenant appui en extrémité libre de la hampe 12 du L, de sorte que les deux extrémités de ladite hampe soient fixes par rapport au boitier 3, la partie médiane 14 de ladite hampe étant sollicitée en flexion élastique pour réaliser l'appui sur la patte 6 correspondante.

Avec un tel agencement, pour un fil en métal à ressort donné, l'effort appliqué sur la patte 6 par la partie médiane 14 de la hampe 12 du L - qui est sollicitée en flexion - est déterminé essentiellement par la longueur de ladite hampe et par le positionnement de la butée 13, ce qui permet un ajustement très fin dudit effort permettant de ne prévoir qu'un seul palier pinçant 5 dans un conduit pinçant 4a.

De façon non représentée, un conduit pinçant 4a peut présenter en outre deux zones non flexibles de guidage de la tige 2 correspondante en contact non serrant, lesdites zones étant radialement opposées selon une deuxième direction Y orthogonale à la première direction X.

Selon la réalisation représentée, la première direction X s'étend longitudinalement et la deuxième direction Y transversalement.

Un tel agencement permet de disposer sur la tige 2 de crans de réglage en hauteur, décrits plus loin dans le cadre de la première réalisation, débouchant latéralement, lesdits crans n'entrant pas en interférence avec les pattes 6 lors d'une manœuvre de coulissement du boitier 3, ce qui pourrait nuire au bon coulissement.

Et une telle orientation des crans de réglage est propice à un verrouillage optimisé du boitier 3 en hauteur en cas de choc violant d'une tête de passager en regard dudit boitier.

De façon non représentée, les zones de guidage sont avantageusement décalées axialement par rapport aux paliers, de manière à optimiser le guidage.

Selon un mode de réalisation non représenté, les zones de guidage sont pourvues de nervures axiales de guidage saillant vers l'intérieur.

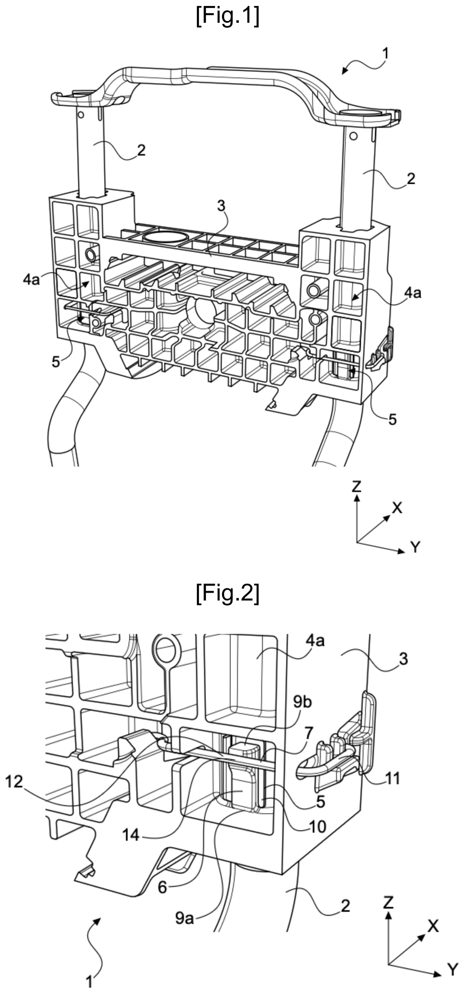

Selon la première réalisation, comme illustré en figure 1, l'appui-tête 1 comprend en outre un dispositif de verrouillage du boitier 3 par rapport aux tiges 2 selon une pluralité de positions verticales, de manière à verrouiller le réglage en hauteur choisi pour ledit boitier, ledit dispositif comprenant :
- une tige crantée pourvue de crans de réglage, non représentés, s'étageant axialement,
- une saillie de verrouillage, non représentée, montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

Avantageusement selon la première réalisation, les deux conduits sont des conduits pinçant 4a.

Selon les réalisations représentées, un conduit pinçant 4a présente un seul palier pinçant 5.

Selon une réalisation non représentée, un conduit pinçant 4a présente deux paliers pinçant 5 situés respectivement en haut et en bas dudit conduit.

Selon la deuxième réalisation, illustrée en figure 4, l'appui-tête 1 comprend en outre un motoréducteur 15 d'actionnement du boitier 3 en coulissement sur les tiges 2, de manière à permettre un réglage motorisé de la position du boitier 3 par rapport auxdites tiges.

En particulier, selon la deuxième réalisation :
- une tige 2 coulisse dans un conduit 4b dépourvu de palier pinçant 5 mais pourvu de zones non flexibles de guidage de ladite tige en contact non serrant,
- l'autre tige 2 coulisse dans un conduit pinçant 4a présentant un seul palier pinçant 5.

Selon la réalisation représentée, le motoréducteur 15 est fixé solidairement aux tiges 2 et actionne en rotation une vis sans fin 16 s'engageant dans un écrou 17 solidaire du boitier 3.

## Revendications

1. Appui-tête (1) de siège de véhicule automobile, ledit appui-tête comprenant :
• deux tiges (2) métalliques parallèles destinées à être montées en haut de dossier dudit siège,
• un boitier (3) en matériau plastique moulé, ledit boitier présentant deux conduits (4a,4b) recevant chacun une tige (2) respective en coulissement de manière à permettre un réglage en hauteur dudit boitier, au moins un desdits conduits étant un conduit pinçant (4a),
ledit conduit pinçant présentant :
• au moins un palier (5) pinçant la tige (2) correspondante, ledit palier présentant une patte (6) élastiquement déformable issue de moulage dudit conduit,
• un ressort (7) de rappel de ladite patte contre ladite tige,
ledit appui-tête étant **caractérisé en ce que** ledit palier pinçant présente une patte (6) unique prenant appui selon une première direction (X) sur la tige (2) correspondante, de sorte que ladite tige soit pincée entre ladite patte et au moins une zone d'appui (8) prévue dans ledit palier pinçant.

2. Appui-tête (1) selon la revendication 1, **caractérisé en ce que** la patte (6) présente une première extrémité (9a) par laquelle elle se relie au reste du boitier (3), de manière à définir dans ledit boitier une fente (10) en forme générale de U permettant l'application de ladite patte vers la tige (2) correspondante, ladite patte présentant une deuxième extrémité (9b) prenant appui sur ladite tige.

3. Appui-tête (1) selon l'une des revendications précédentes, **caractérisé en ce que** le ressort (7) :
• est sous forme d'un fil plié en métal à ressort s'inscrivant dans un plan,
• présente une partie en forme générale de L dont la base (11) est fixée au boitier (3) et dont la hampe (12) prend appui sur la patte (6) correspondante, afin d'actionner ladite patte en appui sur la tige (2) correspondante.

4. Appui-tête (1) selon la revendication 3, **caractérisé en ce qu'**une butée (13) est prévue sur le boitier (3), ladite butée prenant appui en extrémité libre de la hampe (12) du L, de sorte que les deux extrémités de ladite hampe soient fixes par rapport au boitier, la partie médiane (14) de ladite hampe étant sollicitée en flexion élastique pour réaliser l'appui sur la patte (6) correspondante.

5. Appui-tête (1) selon l'une quelconque des revendications 1 à 4, **caractérisé en ce qu'**il comprend en outre un dispositif de verrouillage du boitier (3) par rapport aux tiges (2) selon une pluralité de positions verticales, de manière à verrouiller le réglage en hauteur choisi pour ledit boitier, ledit dispositif comprenant :
• une tige (2) crantée pourvue de crans de réglage s'étageant axialement,
• une saillie de verrouillage montée mobile par rapport audit boitier entre une position de verrouillage, où ladite saillie s'insère dans un desdits crans, et une position de déverrouillage, où ladite saillie se retire dudit cran afin de libérer le coulissement de ladite tige crantée.

6. Appui-tête (1) selon l'une quelconque des revendications 1 à 4, **caractérisé en ce qu'**il comprend en outre un motoréducteur (15) d'actionnement du boitier (3) en coulissement sur les tiges (2), de manière à permettre un réglage motorisé de la position du boitier (3) par rapport auxdites tiges.

7. Appui-tête (1) selon l'une quelconque des revendications 1 à 6, **caractérisé en ce que** les deux conduits sont des conduits pinçant (4a).

8. Appui-tête (1) selon l'une quelconque des revendications 1 à 6, **caractérisé en ce que** :
• une tige (2) coulisse dans un conduit (4b) dépourvu de palier pinçant (5) mais pourvu de zones non flexibles de guidage de ladite tige en contact non serrant,
• l'autre tige (2) coulisse dans un conduit pinçant (4a) présentant un seul palier pinçant (5).

9. Appui-tête (1) selon l'une quelconque des revendications 1 à 8, **caractérisé en ce qu'**un conduit pinçant (4a) présente un seul palier pinçant (5).

10. Appui-tête (1) selon l'une quelconque des revendications 1 à 9, **caractérisé en ce qu'**un conduit pinçant (4a) présente deux paliers pinçant (5) situés respectivement en haut et en bas dudit conduit.
